# EUROPEAN PATENT SPECIFICATION

(11) **EP 1 983 236 B1**
(45) Date of publication and mention of the grant of the patent: **23.03.2011**
(21) Application number: 08153518.9
(22) Date of filing: 28.03.2008
(51) Int. Cl.: F16J 15/12

(54) **Composite seal**
Verbundstoffdichtung
Joint composite

(30) Priority: 17.04.2007 US 736020
(43) Date of publication of application: 22.10.2008
(73) Proprietor: Air Products and Chemicals, Inc., Allentown, PA 18195-1501 (US)
(72) Inventor: Carolan, Michael Francis, Allentown, PA 18103 (US); Minford, Eric, Laurys Station, PA 18059-1119 (US); Cooke, John Albert, Allentown, PA 18104 (US); Calianno, Thomas John, Altburtis, PA 18011 (US)
(74) Representative: Westendorp | Sommer

(56) References cited:
- FR-A- 2 840 968
- US-A- 4 756 561
- US-A- 5 269 540

## Description

### BACKGROUND OF THE INVENTION

This invention relates to seals for providing a substantially fluid-tight joint between materials having different coefficients of thermal and chemical expansion.

Ceramic ion transport membranes are used to separate oxygen from air to produce an oxygen product or to react the separated oxygen with oxidizable compounds such as methane to form oxidized or partially-oxidized reaction products such as synthesis gas. Feed gases such as air are carried to and from ceramic ion transport membrane modules by metal pipes that must sealingly engage the membrane. Non-permeate gases may be withdrawn from the modules by other metal pipes that must also sealingly engage the membrane. Permeated oxygen product may also be withdrawn from the modules by other metal pipes that must sealingly engage the membrane. Devices such as ion transport membranes can operate at significant pressures (as high as 500 psig) and elevated temperatures (typically in the range of 700-1,100°C) and the seals between the metal pipes and the ceramic membrane must withstand many cycles of large temperature swings and continue to provide a fluid tight seal under significant pressure.

It is difficult to provide a reliable, fluid-tight seal between ceramic and metal effective over a broad temperature range due to the significant difference between the coefficients of thermal expansion of the metal as compared with the ceramic. The difference in expansion coefficients combined with the large temperature excursions experienced during device operation means that any seal in contact with both a ceramic and a metal component must be capable of accommodating the stresses and strains caused by the relatively large difference in physical expansion between the components while maintaining hermetic integrity.

A further consideration is maintaining a fluid tight seal between ceramic and metal components in response to differential expansion due to chemical expansion of one component relatively to the other. For example, ion transport membrane ceramic materials can expand or contract when the oxygen partial pressure to which they are subjected changes under isothermal conditions. Chemical expansion is a characteristic of ion transport ceramic material not shared by metals, and this difference causes additional differential expansion between the ceramic and metal parts which can compromise the seal integrity even when the operating temperature remains constant.

There is clearly a need for seals which can accommodate relatively large differences in expansion or contraction of interfacing parts over many cycles without compromising the hermetic integrity of the seal.

US 5269540 (A) discloses a gasket for high temperature applications, comprising: a heat resistant, expandable soft core member composed of inorganic fibers and treated and unexpanded vermiculite containing sodium ions and ammonium ions from immersion in an aqueous solution of sodium ammonium hydrogen phosphate containing the sodium ions and the ammonium ions, said treated vermiculite being such that it starts expansion at at least 275°C and expands to more than twice its original volume at at least 300°C, with no negative expansion over the entire temperature range; and a metallic sheet covering the soft core member.

US 4756561 (A) discloses an engine exhaust system comprising a first exhaust passage member defining a first exhaust passage and formed at an end of said first exhaust passage with a first mating surface, a second exhaust passage defining member defining a second exhaust passage and formed at an end of said second exhaust passage with a second mating surface, fastening means for securing said first and second exhaust passage defining members with said first and second mating surfaces opposed to each other with sealing gasket means interposed therebetween, said gasket means including a pair of thin sheets placed in contact with said mating surfaces, respectively, and an intermediate layer being yieldable and located between said thin sheets, said intermediate layer containing a thermally expandable material which expands from an initial dimension upon first application of heat above a predetermined temperature range and shrinks when the heat is relieved to a second dimension which is greater than the initial dimension, said intermediate layer including fibers of a heat-resistant material, said thermally expandable material being dispersed in said fibers and said thermally expandable material includes mica.

FR-A-2 840 968 discloses a seal in flexible graphite with a metal envelope at high temperature including: a flexible core (10, 40); and a metal envelope (12, 42) surrounding the flexible core, characterised by the fact that it includes a sheath (15, 25, 35, 45) hermetically sealed inside of which is placed a unit composed of the envelope (12, 42) and the flexible core (10, 40).

### BRIEF SUMMARY OF THE INVENTION

The invention concerns a composite seal as defined by claim 1. The composite seal comprises a first metal layer having a first outer perimeter and a first aperture therethrough defined by a first inner perimeter. A second metal layer is positioned in spaced relation to and overlying the first metal layer. The second metal layer has a second outer perimeter and a second aperture defined by a second inner perimeter. At least one of the first perimeters is sealingly joined to one of the second perimeters. A mineral layer is positioned between the first and second metal layers. The mineral layer has a third aperture therein. The apertures of the metal layers and the mineral layer overlap one another. One of the metal layers may have a recess defined by a surrounding sidewall, the recess adapted to receive the mineral layer.

The mineral layer may be formed of mica, vermiculite, a thermally and chemically restructured form of vermiculite, as well as combinations of these materials. The first and second metal layers comprise metal foil, formed from gold; silver; platinum; alloys containing gold, silver or platinum. Preferably the first and second metal layers are the same type of metal.

In one embodiment, the first outer perimeter of the first metal layer is joined to the second outer perimeter of the second metal layer. In another embodiment, the first inner perimeter of the first metal layer is joined to the second inner perimeter of the second metal layer. In yet another embodiment, the inner perimeters are joined as well as the outer perimeters. Preferably, the metal layers are joined by welding.

The invention also encompasses a substantially fluid-tight joint as defined by claim 15. The joint comprises a first surface formed of a material having a first coefficient of expansion and a second surface formed of a material having a second coefficient of expansion different from the first coefficient of expansion. The coefficients of expansion may be thermal coefficients or chemical coefficients for example. A seal is positioned between and in contact with the first and second surfaces. The seal comprises a first metal layer having a first outer perimeter and a first aperture therethrough defined by a first inner perimeter. A second metal layer is positioned in spaced relation to and overlying the first metal layer. The second metal layer has a second outer perimeter and a second aperture defined by a second inner perimeter. One of the first perimeters is sealingly joined to one of the second perimeters. A mineral layer is positioned between the first and second metal layers. The mineral layer has a third aperture therein. The apertures overlap one another. The mineral layer may be made of mica, vermiculite, a thermally and chemically restructured form of vermiculite, or combinations of these materials.

### BRIEF DESCRIPTION OF SEVERAL VIEWS OF THE DRAWINGS

Figure 1 is an exploded perspective view of a composite seal according to the invention; and

Figures 2-4 are longitudinal sectional views of various embodiments of composite seals according to the invention.

### DETAILED DESCRIPTION OF THE INVENTION

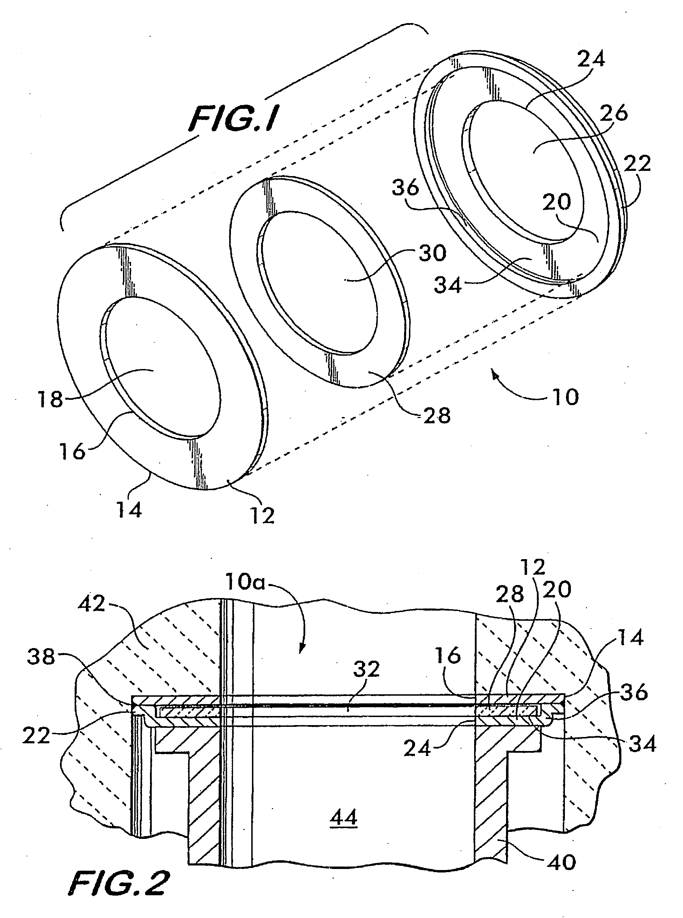

Figure 1 is an exploded perspective view of a composite seal 10 according to the invention. Seal 10 comprises a first metal layer 12 having an outer perimeter 14 and an inner perimeter 16 defining an aperture 18 through the metal layer. A second metal layer 20 is positioned in spaced relation overlying the first metal layer. The second metal layer also has an outer perimeter 22 as well as an inner perimeter 24 that defines an aperture 26 through the second metal layer.

The metal layers are preferably foils having a thickness between about 0.002 inches and about 0.020 inches. Metal foils are preferred for their toughness and flexibility, advantageous qualities for seals that must accommodate significant stresses and strains when in use as described below. Although any metals may be used, according to the invention for high temperature applications metals such as gold; silver; platinum; alloys containing gold, silver or platinum are employed which will not melt or oxidize in the high temperature oxygen rich environments typical of ion transport membranes for example.

A mineral layer 28 is positioned between the first and second metal layers 12 and 22. The mineral layer 28 also has an aperture 30. Preferred minerals include mica, vermiculite, and a thermally and chemically restructured form of vermiculite sold under the trade name of THERMICULITE^{™} by The Flexitallic Group, Inc. of Houston, Texas. The desired characteristics of the mineral layer are the ability to withstand high temperatures and be formed of lamina which cleave or otherwise separate easily in the plane of the mineral layer to accommodate in-plane displacements of the metal layers due to differential radial expansion and contraction caused by the difference in expansion coefficients between the interfacing components joined by the seal, The mineral layer may have a thickness between about 0.001 inches to about 0.1 inches with a preferred thickness between about 0.002 inches to about 0.05 inches. Practical mineral layers formed of mica were used in a composite seal having a thickness of about 0.005 inches. THERMICULITE^{™} layers having a thickness between about 0.017 inches and about 0.034 inches were also used in the seal according to the invention.

When assembled, as shown in Figure 2, the apertures 18,26 and 30 in the metal layers 12 and 20 and the mineral layer 28, respectively, overlap one another and are preferably coaxially aligned so as to form an aperture 32 in the seal assembly comprised of the various layers. Although the layers are illustrated as being round in shape, it is understood that they could be any shape as required to perform the interfacing and sealing function as required for a particular application. (When the seals are round each of the various perimeters may be referred to as a respective circumference.)

In order to facilitate assembly of the seal 10, it is advantageous to form at least one of the metal layers (in this example layer 20) to have a recess 34 defined by a surrounding sidewall 36 which receives the mineral layer 28. This configuration allows the layer's outer perimeter 22 to come into contact with the outer perimeter 14 of metal layer 12 when the metal layers are positioned in overlying relation. With the recess and sidewall formed in the metal layer 20 the outer perimeters of the metal layers may be readily joined as shown in the seal embodiment 10a illustrated in Figure 2.

In the seal embodiment 10a, the outer perimeters 14 and 22 are preferably joined by welding. Orbital welding, using a gas tungsten arc, is advantageous to form the joint 38 at the outer perimeters of the metal layers 12 and 22. The arc generates intense heat which melts the base metal in the region of the joint. The molten metal is allowed to cool and fuse in the presence of an argon purge gas to form a fluid tight joint around the entire perimeter of the seal. No filler metal is used to form the weld. Other techniques for joining the perimeters, including brazing, electron beam welding, crimping, staking, folding, rolling and explosive bonding are also feasible.

Seal embodiment 10a is shown in Figure 2 sealing a joint between a metal tube 40 and a portion of a ceramic component 42. The ceramic component could be, for example, part of an ion transport membrane, and the tube could be formed from a nickel superalloy. Ceramic materials which comprise the ceramic components in joints according to the invention contain certain mixed metal oxide compositions and possess both oxygen ion conductivity and electronic conductivity at elevated temperatures. These materials, known in the art as mixed conducting metal oxides, may be used in applications including gas separation membranes and membrane oxidation reactors. These ceramic membranes are made of selected mixed metal oxide compositions and have been described as ion transport membranes (ITM).

The mixed conducting metal oxide material may have the general stoichiometric composition (Ln₁₋ₓAₓ)_{w}(B_{1-y}B'_{y})O_{3-δ}, wherein Ln represents one or more elements selected from La, the D block lanthanides of the IUPAC periodic table, and Y; wherein A represents one or more elements selected from Mg, Ca, Sr and Ba; wherein B and B' each represent one or more elements selected from Sc, Ti, V, Mn, Fe, Co, Ni, Cu, Cr, Al, Zr and Ga; wherein 0≤x≤1, 0≤y≤1, and 0.95≤w≤1.05; and wherein δ is a number that renders the compound charge neutral. This mixed conducting metal oxide material may have the general stoichiometric composition (LaₓCa₁₋ₓ)_{w} FeO_{3-δ} wherein 1.0>x>0.5, 1,1≥w≥1.0, and δ is a number which renders the composition charge neutral.

The mixed conducting metal oxide material may have the general stoichiometric composition (LaₓSr₁₋ₓ)_{w} CoO_{3-δ} wherein 1.0>x>0.1, 1.05≥w> 0.95, and δ is a number which renders the composition charge neutral. The mixed conducting metal oxide material may have the general stoichiometric composition (La_{0.4}Sr_{0.6})_{w}CoO_{3-δ} wherein 1.05≥w>0.95 and δ is a number which renders the composition charge neutral,

In operation, again with reference to Figure 2, the outside diameter of tube 40 is exposed to high pressure gas while a low pressure gas at high temperature flows through the bore 44 of tube 40, through the seal aperture 32 and into the ceramic component 42. As the device depicted in Figure 2 heats up during operation, the metal tube 40 will expand radially outwardly to a different extent than the portion of the ceramic component 42 to which it is attached due to the difference in the thermal expansion coefficients between the two components. The difference in expansion between the tube 40 and the ceramic component 42 induces shear stress in the seal 10a as the metal layer 20 of the seal, in contact with the tube 40, expands with the tube to a different extent than the metal layer 12, in contact with the ceramic 42, expands. This shear stress is accommodated by flexure of the metal layer's sidewall 36 which defines the recess 34 formed to receive the mineral layer 28 as described above. The shear is also accommodated by the mineral layer 28. The lamina forming this layer separate in plane and allow the metal layer 20 in contact with the tube 40 to expand to a different extent than the metal layer 12 in contact with the ceramic component 42. The fluid tight weld of joint 38 ensures hermetic integrity of the joint, preventing any gas within or without the tube bore 44 from finding a leak path through the mineral layer.

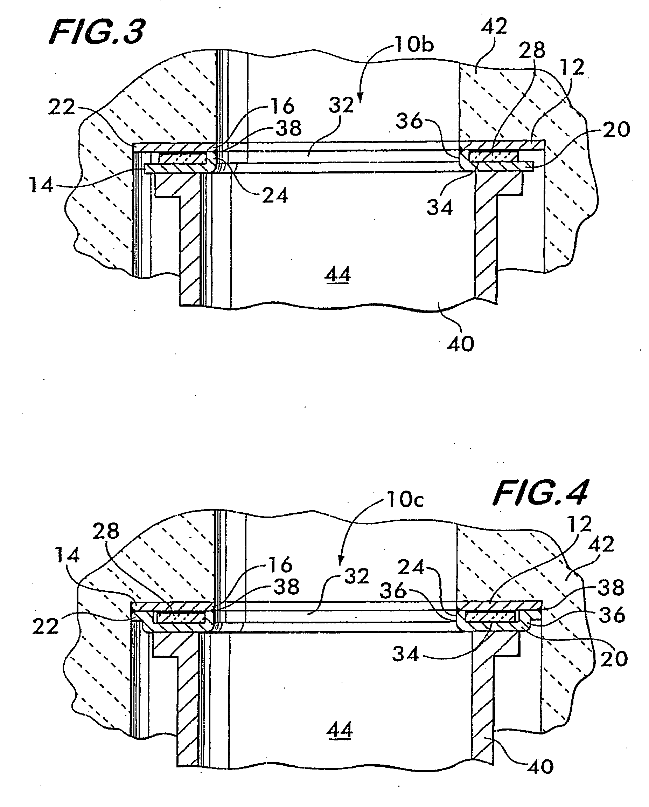

Figure 3 illustrates another seal embodiment 10b wherein the inner perimeters 16 and 24 of the metal layers 12 and 20 are joined, again, preferably by a welded joint 38 which extends continuously around the inner perimeters. Once again, metal layer 20 is deformed to form a recess 34 defined by a sidewall 36 which helps to accommodate shear forces induced by differential expansion on opposite sides of the seal 10b. Figure 4 shows another seal embodiment 10c, wherein both the inner (16, 24) and outer (14, 22) perimeters on each metal layer 12 and 20 are joined, preferably by welded joints 38.

The efficacy of seals according to the invention is borne out in testing. In a first test, a composite seal was formed from two layers of silver foil (each 0.025 cm thick) with an inner diameter of 2.223 cm and an outer diameter of 3.493 cm. One of the foil layers was formed to provide a recess 3.251 cm in diameter and 0.013 cm deep. A mineral layer of muscovite mica having a thickness of 0.010 cm, an inner diameter of 2.223 cm and an outer diameter of 3.239 cm was positioned within the recess and the metal layers were joined at their outer perimeter by welding. The composite seal was placed in facing contact with the open end of a closed end tube made of La_{0.4}Sr_{0.6}CoO₃₋ₓ ceramic where x is a number that makes the compound charge neutral. The opposite face of the seal was engaged with a cup formed of Haynes 230 alloy, the cup having an opening aligned with the aperture of the seal. The tube and seal assembly was placed in a pressure vessel and heated to 875°C and the outside of the assembly was pressurized to 200 psig. The leak rate was below detection limits. The outside of the assembly was then de-pressurized and cooled to room temperature. The assembly was then heated to 875°C and the outside of the assembly was again pressurized to 200 psig. The leak rate was again below detection limits. The heating/pressurization/depressurization/cooling cycles were repeated 10 times, and the maximum leak rate observed at the peak temperature and pressure for any of the cycles was 160 sccm. The leak rate did not increase with the number of cycles.

ln a second example composite seals were formed from two layers of gold foil (each 0.025 cm thick) with an inner diameter of 0.475 cm and an outer diameter of 1.054 cm. One of the foil layers was formed to provide a recess 0.901 cm in diameter and 0.013 cm deep. A mineral layer of muscovite mica having a thickness of 0.010 cm, an inner diameter of 0.475 cm and an outer diameter of 0.889 cm was positioned within the recess and the metal layers were joined at their outer perimeter by welding. Two of the seals were then placed in the base of each of two holes machined into a block of La_{0.9}Ca_{0.1}FeO₃₋ₓ ceramic where x is a number that makes the compound charge neutral. The two holes were in fluid communication. A tube stub fabricated from Haynes 230 alloy was then inserted into each hole such that a composite seal was between the flat end of each tube stub and the flat base of each hole in the ceramic block. The open ends of the tube stubs were welded to inlet and outlet tubing and the assembly was then mounted in a pressure vessel. The outside of the assembly was pressurized to 60 psig, the assembly was heated to 900°C and air flow was initiated through the inlet tube. While at 900°C the pressure outside the assembly was increased, first to 100 psig and then to 215 psig. The difference in outlet and inlet air flow was monitored to assess seal leakage. The assembly was held at 215 psig and 900°C for about 70 hours and then cooled to room temperature and depressurized. The flow difference was below detection limits throughout the test.

The same test was performed on a gasket of identical dimensions having gold foil metal layers and a Thermiculite^{™} mineral layer, The results of the test were the same, i.e., the flow difference was below detection limits throughout the test.

Composite seals according to the invention provide advantages over prior art seals in that, with their metal layers comprising plastically deformable interfacing surfaces, they are able to form hermetic metal to metal and metal to ceramic seals, unlike mineral based seals, which cannot deform plastically and have leak paths between the contacting surfaces as a result. The use of the mineral layer between the metal surfaces provides shear compliance. This shear compliance, due to the planar characteristics of micas and vermiculite, allows relatively large differential expansions between the metal layers of the seal to be accommodated. The ability to plastically deform at the contact surfaces, coupled with the ability to accommodate shear, allows the seals according to the invention to operate effectively when positioned between components having significant differences in chemical and thermal expansion coefficients which undergo large temperature variations.

## Claims

1. A composite seal (10, 10a-c), comprising:
a first metal layer (12) having a first outer perimeter (14) and a first aperture (18) therethrough defined by a first inner perimeter (16);
a second metal layer (20) positioned in spaced relation to and overlying said first metal layer (12), said second metal layer (20) having a second outer perimeter (22) and a second aperture (26) defined by a second inner perimeter (24), at least one of said first perimeters being sealingly joined to one of said second perimeters; and
a mineral layer (28) positioned between said first and second metal layers (12/20), said mineral layer (28) having a third aperture (30) therein, said apertures (18, 26 and 30) overlapping one another, said mineral layer (28) being selected from the group consisting of mica, vermiculite, a thermally and chemically restructured form of vermiculite, and combinations thereof; **characterised in that** said metal layers are selected from the group consisting of gold, silver, platinum, alloys of gold, alloys of silver, and alloys of platinum.

2. A composite seal (10, 10a-c) according to Claim 1, wherein one of said metal layers has a recess (34) defined by a surrounding sidewall (36), said recess (34) adapted to receive said mineral layer (28).

3. A composite seal (10, 10a, c) according to Claim 1, wherein said first outer perimeter (14) of said first metal layer (12) is joined to said second outer perimeter (22) of said second metal layer (20).

4. A composite seal (10c) according to Claim 3, wherein said first inner perimeter (16) of said first metal layer (12) is joined to said second inner perimeter of said second metal layer (20).

5. A composite seal (10b) according to Claim 1, wherein said first inner perimeter (16) of said first metal layer (12) is joined to said second inner perimeter (24) of said second metal layer (20).

6. A composite seal (10, 10a, c) according to Claim 1, wherein said first outer perimeter (14) of said first metal layer (12) is welded to said second outer perimeter (22) of said second metal layer (20).

7. A composite seal (10, 10a-c) according to Claim 1, wherein said metal layers are selected from the group consisting of gold and silver.

8. A composite seal (10, 10a-c) according to Claim 1, wherein said first and second metal layers (12/20) are the same type of metal.

9. A composite seal (10, 10a-c) according to Claim 1, wherein said first and second metal layers (12/20) comprise metal foil.

10. A composite seal (10, 10a, c) according to Claim 1, comprising:
said first metal layer (12) having a first outer circumference (14) and said first aperture (18) therethrough defined by a first inner circumference (16);
said second metal layer (20) positioned in spaced relation to and overlying said first metal layer (12), said second metal layer (20) having a second outer circumference (22) and said second aperture (26) defined by a second inner circumference (24), said first outer circumference (14) being sealingly joined to said second outer circumference (22); and
said mineral layer (28) positioned between said first and second metal layers (12/20), said mineral layer (28) having said third aperture (30) therein, said apertures (18, 26 and 30) overlapping one another, said mineral layer (28) being selected from the group consisting of mica, vermiculite, a thermally and chemically restructured form of vermiculite, and combinations thereof.

11. A composite seal (10, 10a, c) according to Claim 10, wherein one of said metal layers has a recess (34) defined by a surrounding sidewall (36), said recess (34) adapted to receive said mineral layer (28).

12. A composite seal (10, 10a, c) according to Claim 10, wherein said first and second metal layers (12/20) comprise metal foil.

13. A composite seal (10, 10a, c) according to Claim 12, wherein said metal layers are selected from the group consisting of gold and silver.

14. A composite seal (10c) according to Claim 10, wherein said first inner circumference (16) of said first metal layer (12) is sealingly joined to said second inner circumference (24) of said second metal layer (20).

15. A substantially fluid-tight joint (38) comprising:
a first surface formed of a material having a first coefficient of expansion;
a second surface formed of a material having a second coefficient of expansion different from said first coefficient of expansion;
a seal (10, 10a-c) according to claim 1 positioned between and in contact with said first and second surfaces.

16. A joint (38) according to Claim 15, wherein said first outer perimeter (14) of said first metal layer (12) is joined to said second outer perimeter (22) of said second metal layer (20).

17. A joint (38) according to Claim 16, wherein said first inner perimeter (16) of said first metal layer (12) is joined to said second inner perimeter (24) of said second metal layer (20).

18. A joint (38) according to Claim 15, wherein said first inner perimeter (16) of said first metal layer (12) is joined to said second inner perimeter (24) of said second metal layer (20).

19. A joint (38) according to Claim 15, wherein said first outer perimeter (14) of said first metal layer (12) is welded to said second outer perimeter (22) of said second metal layer (20).

20. A joint (38) according to Claim 15, wherein one of said metal layers has a recess (34) defined by a surrounding sidewall (36), said recess (34) adapted to receive said mineral layer (28).

21. A joint (38) according to Claim 15, wherein said metal layers are selected from the group consisting of gold and silver.

22. A joint (38) according to Claim 15, wherein said first and second metal layers (12/20) comprise metal foil.

23. A joint (38) according to Claim 15, wherein said first surface material is a metal and said second surface material is a ceramic.

24. A joint (38) according to Claim 23, wherein said second surface material has the general stoichiometric composition (Ln₁₋ₓAₓ)_{w}(B_{1-y} B'_{y})O_{3-δ}, wherein Ln represents elements selected from the group consisting of La, the D block lanthanides of the IUPAC periodic table, Y and combinations thereof; wherein A represents elements selected from the group consisting of Mg, Ca, Sr, Ba and combinations thereof; wherein B and B' each represent elements selected from the group consisting of Sc, Ti, V, Mn, Fe, Co, Ni, Cu, Cr, Al, Zr, Ga and combinations thereof; wherein 0≤x≤1, 0≤y≤1, and 0.95≤w≤1.05; and wherein δ is a number that renders the compound charge neutral.

25. A joint (38) according to Claim 23, wherein said second surface material has the general stoichiometric composition (La_{X}Ca₁₋ₓ)_{w} FeO_{3-δ} wherein 1.0>x>0.5, 1.1≥w≥1.0, and δ is a number which renders the composition charge neutral.

26. A joint (38) according to Claim 23, wherein said second surface material has the general stoichiometric composition (LaₓSr₁₋ₓ)_{w} CoO_{3-δ} wherein 1.0>x>0.1, 1.05≥w> 0.95, and δ is a number which renders the composition charge neutral.

27. A joint (38) according to Claim 23, wherein said second surface material has the general stoichiometric composition (La₀.₄Sr₀.₆)_{w}CoO_{3-δ} wherein 1.05≥w>0.95 and δ is a number which renders the composition charge neutral.

## Patentansprüche

1. Verbundstoffdichtung (10, 10a-c), umfassend:
eine erste Metallschicht (12) mit einem ersten äußeren Umfang (14) und einem ersten Durchlass (18) **dadurch**, definiert durch einen ersten inneren Umfang (16);
eine zweite Metallschicht (20), positioniert in beabstandeter Beziehung zu und aufliegend auf der ersten Metallschicht (12), wobei die zweite Metallschicht (20) einen zweiten äußeren Umfang (22) und einen zweiten Durchlass (26), definiert durch einen zweiten inneren Umfang (24), aufweist, wobei mindestens einer der ersten Umfänge mit einem der zweiten Umfänge abdichtend verbunden ist; und
eine Mineralschicht (28), positioniert zwischen den ersten und zweiten Metallschichten (12/20), wobei die Mineralschicht (28) einen dritten Durchlass (30) darin aufweist, wobei die Durchlässe (18, 26 und 30) einander überlappen, wobei die Mineralschicht (28) aus der Gruppe ausgewählt ist, welche aus Glimmer, Vermiculit, einer thermisch und chemisch restrukturierten Form von Vermiculit und Kombinationen davon besteht; **dadurch gekennzeichnet, dass** die Metallschichten aus der Gruppe ausgewählt sind, welche aus Gold, Silber, Platin, Goldlegierungen, Silberlegierungen und Platinlegierungen besteht.

2. Verbundstoffdichtung (10, 10a-c) gemäß Anspruch 1, wobei eine der Metallschichten eine Vertiefung (34), definiert durch eine umgebende Seitenwand (36), aufweist, wobei die Vertiefung (34) zum Aufnehmen der Mineralschicht (28) angepasst ist.

3. Verbundstoffdichtung (10, 10a, c) gemäß Anspruch 1, wobei der erste äußere Umfang (14) der ersten Metallschicht (12) mit dem zweiten äußeren Umfang (22) der zweiten Metallschicht (20) verbunden ist.

4. Verbundstoffdichtung (10c) gemäß Anspruch 3, wobei der erste innere Umfang (16) der ersten Metallschicht (12) mit dem zweiten inneren Umfang der zweiten Metallschicht (20) verbunden ist.

5. Verbundstoffdichtung (10b) gemäß Anspruch 1, wobei der erste innere Umfang (16) der ersten Metallschicht (12) mit dem zweiten inneren Umfang (24) der zweiten Metallschicht (20) verbunden ist.

6. Verbundstoffdichtung (10, 10a, c) gemäß Anspruch 1, wobei der erste äußere Umfang (14) der ersten Metallschicht (12) mit dem zweiten äußeren Umfang (22) der zweiten Metallschicht (20) verschweißt ist.

7. Verbundstoffdichtung (10, 10a-c) gemäß Anspruch 1, wobei die Metallschichten aus der Gruppe ausgewählt sind, welche aus Gold und Silber besteht.

8. Verbundstoffdichtung (10, 10a-c) gemäß Anspruch 1, wobei die ersten und zweiten Metallschichten (12/20) aus dem gleichen Metalltyp bestehen.

9. Verbundstoffdichtung (10, 10a-c) gemäß Anspruch 1, wobei die ersten und zweiten Metallschichten (12/20) Blattmetall umfassen.

10. Verbundstoffdichtung (10, 10a, c) gemäß Anspruch 1, umfassend:
die erste Metallschicht (12) mit einem ersten äußeren Kreisumfang (14) und dem ersten Durchlass (18) **dadurch**, definiert durch einen ersten inneren Kreisumfang (16);
die zweite Metallschicht (20), positioniert in beabstandeter Beziehung zu und aufliegend auf der ersten Metallschicht (12), wobei die zweite Metallschicht (20) einen zweiten äußeren Kreisumfang (22) und den zweiten Durchlass (26), definiert durch einen zweiten inneren Kreisumfang (24), aufweist, wobei der erste äußere Kreisumfang (14) mit dem zweiten äußeren Kreisumfang (22) abdichtend verbunden ist; und
die Mineralschicht (28), positioniert zwischen den ersten und zweiten Metallschichten (12/20), wobei die Mineralschicht (28) den dritten Durchlass (30) darin aufweist, wobei die Durchlässe (18, 26 und 30) einander überlappen, wobei die Mineralschicht (28) aus der Gruppe ausgewählt ist, welche aus Glimmer, Vermiculit, einer thermisch und chemisch restrukturierten Form von Vermiculit und Kombinationen davon besteht.

11. Verbundstoffdichtung (10, 10a, c) gemäß Anspruch 10, wobei eine der Metallschichten eine Vertiefung (34), definiert durch eine umgebende Seitenwand (36), aufweist, wobei die Vertiefung (34) zum Aufnehmen der Mineralschicht (28) angepasst ist.

12. Verbundstoffdichtung (10, 10a, c) gemäß Anspruch 10, wobei die ersten und zweiten Metallschichten (12/20) Blattmetall umfassen.

13. Verbundstoffdichtung (10, 10a, c) gemäß Anspruch 12, wobei die Metallschichten aus der Gruppe ausgewählt sind, welche aus Gold und Silber besteht.

14. Verbundstoffdichtung (10c) gemäß Anspruch 10, wobei der erste innere Kreisumfang (16) der ersten Metallschicht (12) mit dem zweiten inneren Kreisumfang (24) der zweiten Metallschicht (20) abdichtend verbunden ist.

15. Im Wesentlichen fluiddichte Verbindung (38), umfassend:
eine erste Oberfläche, gebildet aus einem Material mit einem ersten Ausdehnungskoeffizienten;
eine zweite Oberfläche, gebildet aus einem Material mit einem zweiten Ausdehnungskoeffizienten, welcher von dem ersten Ausdehnungskoeffizienten verschieden ist;
eine Dichtung (10, 10a-c) gemäß Anspruch 1, positioniert zwischen und in Kontakt mit den ersten und zweiten Oberflächen.

16. Verbindung (38) gemäß Anspruch 15, wobei der erste äußere Umfang (14) der ersten Metallschicht (12) mit dem zweiten äußeren Umfang (22) der zweiten Metallschicht (20) verbunden ist.

17. Verbindung (38) gemäß Anspruch 16, wobei der erste innere Umfang (16) der ersten Metallschicht (12) mit dem zweiten inneren Umfang (24) der zweiten Metallschicht (20) verbunden ist.

18. Verbindung (38) gemäß Anspruch 15, wobei der erste innere Umfang (16) der ersten Metallschicht (12) mit dem zweiten inneren Umfang (24) der zweiten Metallschicht (20) verbunden ist.

19. Verbindung (38) gemäß Anspruch 15, wobei der erste äußere Umfang (14) der ersten Metallschicht (12) mit dem zweiten äußeren Umfang (22) der zweiten Metallschicht (20) verschweißt ist.

20. Verbindung (38) gemäß Anspruch 15, wobei eine der Metallschichten eine Vertiefung (34), definiert durch eine umgebende Seitenwand (36), aufweist, wobei die Vertiefung (34) zum Aufnehmen der Mineralschicht (28) angepasst ist.

21. Verbindung (38) gemäß Anspruch 15, wobei die Metallschichten aus der Gruppe ausgewählt sind, welche aus Gold und Silber besteht.

22. Verbindung (38) gemäß Anspruch 15, wobei die ersten und zweiten Metallschichten (12/20) Blattmetall umfassen.

23. Verbindung (38) gemäß Anspruch 15, wobei das erste Oberflächenmaterial ein Metall ist und das zweite Oberflächenmaterial eine Keramik ist.

24. Verbindung (38) gemäß Anspruch 23, wobei das zweite Oberflächenmaterial die allgemeine stöchiometrische Zusammensetzung (Ln₁₋ₓAₓ)_{w}(B_{1-y}B'_{y})O_{3-δ} aufweist, wobei Ln Elemente darstellt, welche aus der Gruppe ausgewählt sind, die aus La, den D-Block-Lanthaniden des IUPAC-Periodensystems, Y und Kombinationen davon besteht; wobei A Elemente darstellt, welche aus der Gruppe ausgewählt sind, die aus Mg, Ca, Sr, Ba und Kombinationen davon besteht; wobei B und B' jeweils Elemente darstellen, welche aus der Gruppe ausgewählt sind, die aus Sc, Ti, V, Mn, Fe, Co, Ni, Cu, Cr, Al, Zr, Ga und Kombinationen davon besteht; wobei 0≤x≤1, 0≤y≤1 und 0,95≤w≤1,05 sind; und wobei δ eine Zahl ist, welche die Verbindungsladung neutral macht.

25. Verbindung (38) gemäß Anspruch 23, wobei das zweite Oberflächenmaterial die allgemeine stöchiometrische Zusammensetzung (LaₓCa₁₋ₓ)_{w}FeO_{3-δ} aufweist, wobei 1,0>x>0,5, 1,1≥w≥1,0 sind, und δ eine Zahl ist, welche die Verbindungsladung neutral macht.

26. Verbindung (38) gemäß Anspruch 23, wobei das zweite Oberflächenmaterial die allgemeine stöchiometrische Zusammensetzung (LaₓSr₁₋ₓ)_{w}CoO_{3-δ} aufweist, wobei 1,0>x>0,1, 1,05≥w≥0,95 sind, und δ eine Zahl ist, welche die Verbindungsladung neutral macht.

27. Verbindung (38) gemäß Anspruch 23, wobei das zweite Oberflächenmaterial die allgemeine stöchiometrische Zusammensetzung (La_{0,4}Sr_{0,6})_{w}CoO_{3-δ} aufweist, wobei 1,05≥w≥0,95 ist und δ eine Zahl ist, welche die Verbindungsladung neutral macht.

## Revendications

1. Joint composite (10, 10a-c), comprenant:
une première couche de métal (12) qui présente un premier périmètre extérieur (14) et une première ouverture (18) qui est définie à travers celle-ci par un premier périmètre intérieur (16);
une deuxième couche de métal (20) qui est positionnée dans une relation espacée avec et qui recouvre ladite première couche de métal (12), ladite deuxième couche de métal (20) présentant un deuxième périmètre extérieur (22) et une deuxième ouverture (26) qui est définie par un deuxième périmètre intérieur (24), au moins un desdits premiers périmètres étant joint de façon étanche à l'un desdits deuxièmes périmètres; et
une couche de minéral (28) qui est positionnée entre lesdites première et deuxième couches de métal (12, 20), ladite couche de minéral (28) présentant une troisième ouverture (30) qui la traverse, lesdites ouvertures (18, 26 et 30) se recouvrant mutuellement, ladite couche de minéral (28) étant sélectionnée dans le groupe comprenant le mica, la vermiculite, une forme thermiquement et chimiquement restructurée de vermiculite, et des combinaisons de ceux-ci,
**caractérisé en ce que** lesdites couches de métal sont sélectionnées dans le groupe comprenant l'or, l'argent, le platine, des alliages d'or, des alliages d'argent et des alliages de platine.

2. Joint composite (10, 10a-c) selon la revendication 1, dans lequel une desdites couches de métal comporte un évidement (34) qui est défini par une paroi latérale périphérique (36), ledit évidement (34) étant adapté pour recevoir ladite couche de minéral (28).

3. Joint composite (10, 10a, 10c) selon la revendication 1, dans lequel ledit premier périmètre extérieur (14) de ladite première couche de métal (12) est joint audit deuxième périmètre extérieur (22) de ladite deuxième couche de métal (20).

4. Joint composite (10c) selon la revendication 3, dans lequel ledit premier périmètre intérieur (16) de ladite première couche de métal (12) est joint audit deuxième périmètre intérieur de ladite deuxième couche de métal (20).

5. Joint composite (lOb) selon la revendication 1, dans lequel ledit premier périmètre intérieur (16) de ladite première couche de métal (12) est joint audit deuxième périmètre intérieur (24) de ladite deuxième couche de métal (20).

6. Joint composite (10, 10a, 10c) selon la revendication 1, dans lequel ledit premier périmètre extérieur (14) de ladite première couche de métal (12) est soudé audit deuxième périmètre extérieur (22) de ladite deuxième couche de métal (20).

7. Joint composite (10, 10a-c) selon la revendication 1, dans lequel lesdites couches de métal sont sélectionnées dans le groupe comprenant l'or et l'argent.

8. Joint composite (10, 10a-c) selon la revendication 1, dans lequel lesdites première et deuxième couches de métal (12, 20) sont constituées du même type de métal.

9. Joint composite (10, 10a-c) selon la revendication 1, dans lequel lesdites première et deuxième couches de métal (12, 20) comprennent une feuille de métal.

10. Joint composite (10, 10a, 10c) selon la revendication 1, dans lequel:
ladite première couche de métal (12) présente une première circonférence extérieure (14), et ladite première ouverture (18) est définie à travers celle-ci par une première circonférence intérieure (16);
ladite deuxième couche de métal (20) est positionnée dans une relation espacée avec et recouvre ladite première couche de métal (12), ladite deuxième couche de métal (20) présente une deuxième circonférence extérieure (22) et une deuxième ouverture (26) qui est définie par ladite deuxième circonférence intérieure (24), ladite première circonférence extérieure (24) étant jointe de façon étanche à ladite deuxième circonférence extérieure (22); et
ladite couche de minéral (28) est positionnée entre lesdites première et deuxième couches de métal (12, 20), ladite couche de minéral (28) présente une troisième ouverture (30) qui la traverse, lesdites ouvertures (18, 26 et 30) se recouvrent mutuellement, ladite couche de minéral (28) étant sélectionnée dans le groupe comprenant le mica, la vermiculite, une forme thermiquement et chimiquement restructurée de vermiculite, et des combinaisons de ceux-ci.

11. Joint composite (10, 10a, 10c) selon la revendication 10, dans lequel une desdites couches de métal comporte un évidement (34) qui est défini par une paroi latérale périphérique (36), ledit évidement (34) étant adapté pour recevoir ladite couche de minéral (28).

12. Joint composite (10, 10a, 10c) selon la revendication 10, dans lequel lesdites première et deuxième couches de métal (12, 20) comprennent une feuille de métal.

13. Joint composite (10, 10a, 10c) selon la revendication 12, dans lequel lesdites couches de métal sont sélectionnées dans le groupe comprenant l'or et l'argent.

14. Joint composite (10c) selon la revendication 10, dans lequel ladite première circonférence intérieure (16) de ladite première couche de métal (12) est jointe de façon étanche à ladite deuxième circonférence intérieure (24) de ladite deuxième couche de métal (20).

15. Joint sensiblement étanche au fluide (38), comprenant:
une première surface qui est constituée d'une matière qui présente un premier coefficient de dilatation;
une deuxième surface qui est constituée d'une matière qui présente un deuxième coefficient de dilatation qui est différent dudit premier coefficient de dilatation; et
un joint (10, 10a-c) selon la revendication 1 qui est positionné entre et en contact avec lesdites première et deuxième surfaces.

16. Joint (38) selon la revendication 15, dans lequel ledit premier périmètre extérieur (14) de ladite première couche de métal (12) est joint audit deuxième périmètre extérieur (22) de ladite deuxième couche de métal (20).

17. Joint (38) selon la revendication 16, dans lequel ledit premier périmètre intérieur (16) de ladite première couche de métal (12) est joint audit deuxième périmètre intérieur (24) de ladite deuxième couche de métal (20).

18. Joint (38) selon la revendication 15, dans lequel ledit premier périmètre intérieur (16) de ladite première couche de métal (12) est joint audit deuxième périmètre intérieur (24) de ladite deuxième couche de métal (20).

19. Joint (38) selon la revendication 15, dans lequel ledit premier périmètre extérieur (14) de ladite première couche de métal (12) est soudé audit deuxième périmètre extérieur (22) de ladite deuxième couche de métal (20).

20. Joint (38) selon la revendication 15, dans lequel une desdites couches de métal comporte un évidement (34) qui est défini par une paroi latérale périphérique (36), ledit évidement (34) étant adapté pour recevoir ladite couche de minéral (28).

21. Joint (38) selon la revendication 15, dans lequel lesdites couches de métal sont sélectionnées dans le groupe comprenant l'or et l'argent.

22. Joint (38) selon la revendication 15, dans lequel lesdites première et deuxième couches de métal (12, 20) comprennent une feuille de métal.

23. Joint (38) selon la revendication 15, dans lequel la matière de ladite première surface est un métal, et la matière de ladite deuxième surface est une céramique.

24. Joint (38) selon la revendication 23, dans lequel la matière de ladite deuxième surface présente la composition stoechiométrique générale (Ln₁₋ₓAₓ) _{w} (B_{1-y}B'y)O_{3-δ}, dans laquelle Ln représente des éléments sélectionnés dans le groupe comprenant le La, les lanthanides du bloc D du tableau périodique IUPAC, l'Y et des combinaisons de ceux-ci; dans laquelle A représente des éléments sélectionnés dans le groupe comprenant le Mg, le Ca, le Sr, le Ba et des combinaisons de ceux-ci; dans laquelle B et B' représentent chacun des éléments sélectionnés dans le groupe comprenant le Sc, le Ti, le V, le Mn, le Fe, le Co, le Ni, le Cu, le Cr, l'Al, le Zr, le Ga et des combinaisons de ceux-ci; dans laquelle 0≤x≤1, 0≤y≤1, et 0,95≤w≤1,05 ; et dans laquelle δ est un nombre qui rend la charge du composé neutre.

25. Joint (38) selon la revendication 23, dans lequel la matière de ladite deuxième surface présente la composition stoechiométrique générale (LaₓCa₁₋ₓ)_{w} FeO_{3-δ}, dans laquelle 1,0>x>0,5, 1,1≥w≥1,0; et dans laquelle δ est un nombre qui rend la charge du composé neutre.

26. Joint (38) selon la revendication 23, dans lequel la matière de ladite deuxième surface présente la composition stoechiométrique générale (LaₓSr₁₋ₓ)_{w} CoO_{3-δ}, dans laquelle 1,0>x>0,1, 1,05≥w>0,95; et dans laquelle δ est un nombre qui rend la charge du composé neutre.

27. Joint (38) selon la revendication 23, dans lequel la matière de ladite deuxième surface présente la composition stoechiométrique générale (La_{0,4}Sr_{0,6})_{w} CoO_{3-δ}, dans laquelle 1,05≥w>0,95; et dans laquelle δ est un nombre qui rend la charge du composé neutre.
